# EUROPÄISCHE PATENTSCHRIFT

(11) **EP 0 819 581 B1**
(45) Veröffentlichungstag und Bekanntmachung des Hinweises auf die Patenterteilung: **14.03.2001**
(21) Anmeldenummer: 97111297.4
(22) Anmeldetag: 04.07.1997
(51) Int. Cl.: B60R 21/16

(54) **Gassack für ein Fahrzeuginsassen-Rückhaltesystem**
Air bag for a vehicle occupant restraint system
Sac gonflable pour un système de retenue d'un occupant de véhicule

(30) Priorität: 18.07.1996 DE 29612502 U
(43) Veröffentlichungstag der Anmeldung: 21.01.1998
(73) Patentinhaber: TRW Occupant Restraint Systems GmbH & Co. KG, 73551 Alfdorf (DE)
(72) Erfinder: Berger, Jürgen, 73557 Mutlangen (DE)
(74) Vertreter: Degwert, Hartmut, Dipl.-Phys.

(56) Entgegenhaltungen:
- EP-A- 0 423 981
- EP-A- 0 495 410
- DE-A- 4 306 615

## Beschreibung

Die Erfindung betrifft einen Gassack für ein Fahrzeuginsassen-Rückhaltesystem und insbesondere einen Gassack, bei dem Abströmöffnungen vorgesehen sind, aus denen bei entfaltetem Gassack ein Teil des zum Entfalten des Gassacks verwendeten Gases ausströmen kann.

Durch kontrolliertes Ausströmen des Gases aus dem entfalteten Gassack wird, abgestimmt auf die im Einzelfall vorliegende Unfallschwere und das Gewicht des Fahrzeuginsassens, eine optimale Rückhaltefunktion durch den entfalteten Gassack erzielt. Das Ausströmen des Gases aus dem Gassack kann beispielsweise durch eine in der Wandung des Gassacks gebildete Ausströmöffnung erzielt werden, die durch Ausschneiden eines Gewebeteils erhalten wird. Bei einer solchen Ausströmöffnung wird im allgemeinen die Berandung der Ausströmöffnung durch einen aufgebrachten Gewebering verstärkt.

In der deutschen Offenlegungsschrift DE-43 06 615 wird ein gattungsgemäßer Gassack beschrieben, der einige aus Einschnitten in die Gassackwand gebildeten Ausströmöffnungen aufweist. Diese Ausströmöffnungen können beispielsweise in der Form halbkreisförmiger Klappen gestaltet sein. Die Enden der Einschnitte sind kreisförmig ausgebildet, womit ein Weiterreißen der Einschnitte verhindert wird.

Gemäß der Erfindung ist ein Gassack für ein Fahrzeuginsassen-Rückhaltesystem geschaffen, mit einer Wandung, die einen mit Druckgas befüllbaren Innenraum abgrenzt und in der eine Vielzahl von gekrümmten Einschnitten vorgesehen sind, die jeweils eine Ausströmöffnung für das Druckgas bestimmen , wobei der Querschnitt jeder Ausströmöffnung zwischen etwa 20 mm² und etwa 200 mm² beträgt. Anstelle nur einige Ausströmöffnungen nach dem Stand der Technik, die durch Einschneiden eines Gewebeteils in die Wandung des Gassacks gebildet sind, ist gemäß der Erfindung vorgesehen, daß eine Vielzahl von kleinen Ausströmöffnungen gebildet sind.

Wenn eine Vielzahl von Ausströmöffnungen verwendet wird, kann jede einzelne Ausströmöffnung sehr viel kleiner sein als die Ausströmöffnungen, die im Stand der Technik verwendet werden. Dies führt zu einer insgesamt geringeren Schwächung der Wandung durch die Ausströmöffnungen, so daß keine Verstärkung um die Ausströmöffnungen herum mehr notwendig ist. Dadurch ergibt sich neben einer Materialeinsparung ein geringeres Volumen des zusammengefalteten Gassacks. Weiterhin entsteht kein Abfall bei der Herstellung des erfindungsgemäßen Gassacks, da kein Material ausgeschnitten wird. Schließlich ergibt sich ein geringerer Aufwand bei der Endkontrolle der Gassäcke. Üblicherweise werden Ausströmöffnungen maschinell geschnitten. Wenn nur eine einzige Ausströmöffnung vorgesehen ist, muß durch die Endkontrolle unter allen Umständen sichergestellt werden, daß diese Ausströmöffnung in der vorgesehenen Weise ausgebildet wurde, da eine Unregelmäßigkeit eben die einzige Ausströmöffnung betrifft. Wenn dagegen eine Vielzahl von Ausströmöffnungen verwendet wird, ist es hinnehmbar, daß unter Umständen ein geringer Teil dieser Ausströmöffnungen nicht in der vorgesehenen Weise ausgebildet wurde, da die verbleibenden, korrekt ausgebildeten Ausströmöffnungen immer noch das gewünschte Verhalten des Gassacks bei einem Aufprall gewährleisten.

Gemäß einer bevorzugten Ausführungsform der Erfindung ist vorgesehen, daß die Einschnitte die Gestalt eines Kreisbogens haben. Somit ergibt sich eine annähernd kreisrunde Ausströmöffnung, wodurch die Festigkeit des die entsprechende Ausströmöffnung umgebenden Gewebes kaum beeinträchtigt wird.

Die Erfindung wird nachfolgend unter Bezugnahme auf die beigefügte Zeichnung beschrieben. In dieser zeigen:
- Figur 1 einen schematischen Querschnitt durch einen erfindungsgemäßen Gassack;
- Figur 2 eine schematische Draufsicht auf den Gassack von Figur 1;
- Figur 3 schematisch und vergrößert eine Draufsicht auf einen Teil des Gassacks von Figur 1.

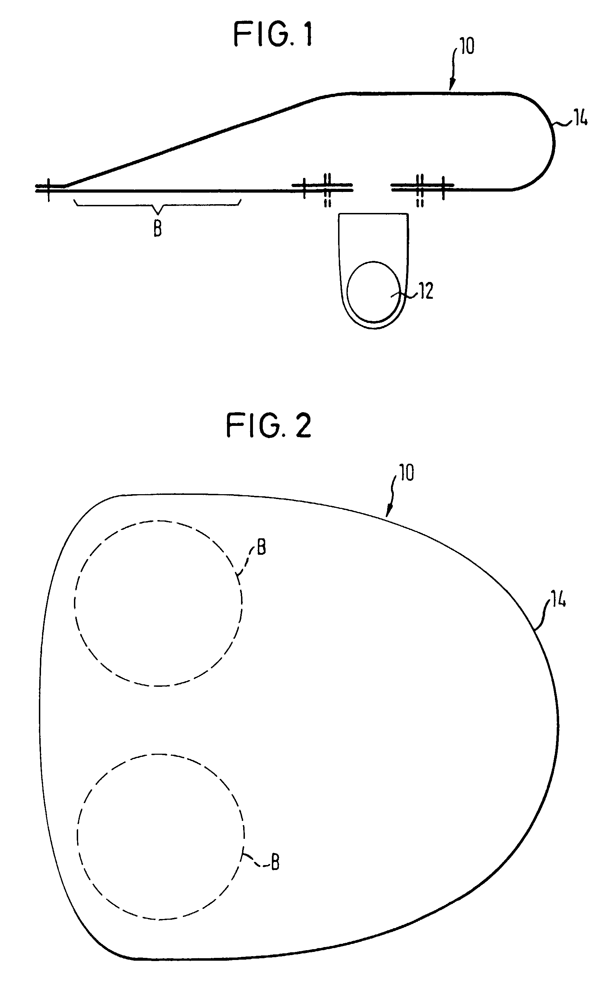

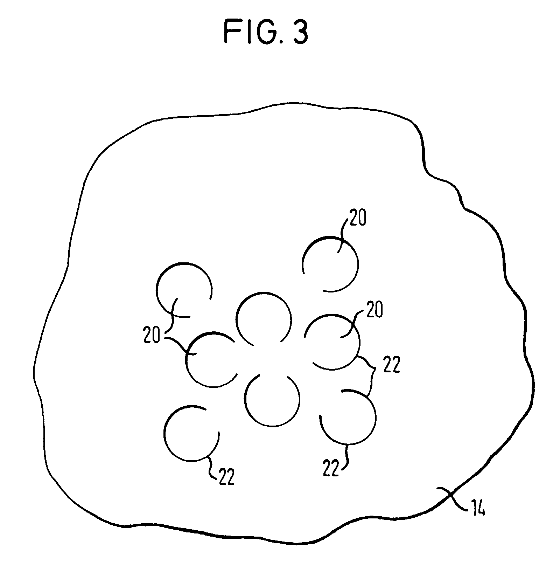

In den Figuren 1 und 2 ist schematisch ein erfindungsgemäßer Gassack 10 dargestellt, der mittels eines Gasgenerators 12 mit Druck beaufschlagt und dadurch entfaltet werden kann. In der Wandung 14 des Gassacks 10 sind eine Vielzahl von Ausströmöffnungen 20 gebildet, die in Figur 3 vergrößert dargestellt sind. Die Ausströmöffnungen sind in Bereichen B angeordnet, so daß sie bei entfaltetem Gassack 10 von einem durch den Gassack zu schützenden Fahrzeuginsassen abgewandt sind, also beispielsweise der Windschutzscheibe oder dem Armaturenbrett des Fahrzeugs zugewandt. Diese Bereiche B entsprechen Abschnitten der Wandung des Gassacks 10, die bei entfaltetem Gassack vergleichsweise gering belastet werden.

Die Ausströmöffnungen sind jeweils durch einen gekrümmten Einschnitt 22 bestimmt, der bei der dargestellten bevorzugten Ausführungsform die Gestalt eines Kreisbogens hat, der sich, gemessen vom Mittelpunkt der entsprechenden Ausströmöffnung, über einen Winkelbereich von mehr als 180° erstreckt. Auf diese Weise ist für jede Ausströmöffnung ein nahezu kreisförmiger Gewebelappen gebildet, der, wenn der durch die Wandung 14 abgegrenzte Innenraum des Gassacks mit Druckgas befüllt ist, zum Außenraum des Gassacks hin aufgeklappt wird, so daß ein Teil des Druckgases ausströmen kann.

Die Ausströmöffnungen haben vorzugsweise einen Querschnitt zwischen etwa 20 mm² und 200 mm². Der von allen Ausströmöffnungen zusammen gebildete Gesamtquerschnitt kann in der Größenordnung von etwa 3000 mm² betragen, wobei dieser Wert sich in Abhängigkeit von den jeweiligen Anforderungen und Einsatzbedingungen ändern kann.

Gemäß einer nicht dargestellten alternativen Ausgestaltung können die die Ausströmöffnungen bestimmenden Einschnitte auch so ausgeführt sein, daß sie die Gestalt eines Ellipsenbogens oder einer ähnliche Geometrie haben. Die längere Halbachse des Ellipsenbogens kann dann relativ zur Richtung der Kett- und Schußfäden des die Wandung des Gassacks bildenden Gewebes so ausgerichtet werden, daß die Festigkeit der Wandung am wenigsten beeinträchtigt wird.

## Patentansprüche

1. Gassack für ein Fahrzeuginsassen-Rückhaltesystem, mit einer Wandung (14), die einen mit Druckgas befüllbaren Innenraum abgrenzt und in der eine Vielzahl von gekrümmten Einschnitten (22) vorgesehen sind, die jeweils eine Ausströmöffnung (20) für das Druckgas bestimmen, dadurch gekennzeichnet, daß der Querschnitt jeder Ausströmöffnung (20) zwischen etwa 20 mm² und etwa 200 mm² beträgt.

2. Gassack nach Anspruch 1, dadurch gekennzeichnet, daß die Einschnitte (22) die Gestalt eines Kreisbogens haben.

3. Gassack nach Anspruch 1, dadurch gekennzeichnet, daß die Einschnitte (22) die Gestalt eines Ellipsenbogens haben.

4. Gassack nach einem der Ansprüche 2 und 3, dadurch gekennzeichnet, daß die Einschnitte (22), gemessen vom Mittelpunkt der entspechenden Ausströmöffnung (20), sich über einen Winkelbereich von mehr als 180° erstrecken.

5. Gassack nach einem der vorhergehenden Ansprüche, dadurch gekennzeichnet, daß die Ausströmöffnungen (20) einen Gesamtquerschnitt von etwa 3000 mm² haben.

## Claims

1. A gas bag for a vehicular occupant restraint system, comprising a wall (14) defining an interior space for filling with pressurized gas and in which a multitude of curved nicks (22) are provided, each of which determines an outflow opening (20) for the pressurized gas, characterized in that the cross-section of each outflow opening (20) amounts to between approximately 20 mm² and approximately 200 mm².

2. The gas bag as set forth in claim 1, characterized in that said nicks (22) have the form of a circular arc.

3. The gas bag as set forth in claim 1, characterized in that said nicks (22) have the form of an elliptical arc.

4. The gas bag as set forth in any of the claims 2 and 3, characterized in that said nicks (22), as measured from the center point of the corresponding outflow opening (20), cover an angular range of more than 180°.

5. The gas bag as set forth in any of the preceding claims, characterized in that the outflow openings (20) have a total cross-section of approximately 3000 mm².

## Revendications

1. Coussin à gaz pour un système de retenue de passagers d'un véhicule, avec une paroi (14), qui délimite une chambre intérieure que l'on peut remplir avec un gaz sous pression, et dans laquelle il est prévu une multitude d'entailles recourbées (22) qui déterminent chacune une ouverture d'écoulement (20) pour le gaz sous pression, caractérisé en ce que la section transversale de chaque ouverture d'écoulement (20) est entre environ 20 mm² et environ 200 mm².

2. Coussin à gaz selon la revendication 1, caractérisé en ce que les entailles (22) ont la forme d'un arc de cercle.

3. Coussin à gaz selon la revendication 1, caractérisé en ce que les entailles (22) ont la forme d'un arc d'ellipse.

4. Coussin à gaz selon l'une des revendications 2 et 3, caractérisé en ce que les entailles (22), mesurées à partir du centre de l'ouverture d'écoulement correspondante (20), s'étendent sur une zone angulaire de plus de 180°.

5. Coussin à gaz selon l'une des revendications précédentes, caractérisé en ce que les ouvertures d'écoulement (20) ont une section transversale totale d'environ 300 mm².
